# FASCICULE DE BREVET EUROPEEN

(11) **EP 0 761 964 B1**
(45) Date de publication et mention de la délivrance du brevet: **27.03.2002**
(21) Numéro de dépôt: 96401818.8
(22) Date de dépôt: 26.08.1996
(51) Int. Cl.: F03D 1/06, F03D 1/02, F03D 7/02

(54) **Aérogénérateur birotor**
Doppeltradwindkraftturbine
Wind turbine with twin rotor

(30) Priorité: 28.08.1995 FR 9510132; 19.08.1996 FR 9610269
(43) Date de publication de la demande: 12.03.1997
(73) Titulaire: Alexandroff, Grégoire, 75011 Paris (FR)
(72) Inventeur: Alexandroff, Grégoire, 75011 Paris (FR)

(56) Documents cités:
- EP-A- 0 143 467
- WO-A-84/00053
- DE-A- 3 113 247
- DE-C- 125 190
- DE-C- 549 618
- DE-U- 9 419 057
- GB-A- 331 683

## Description

L'invention est relative à la construction de centrales électrique éoliennes.
A ce jour, il n'a pas été possible de construire des centrales électriques éoliennes d'une puissance et d'une productivité comparables à celles des centrales électriques thermiques ou nucléaires. Certains constructeurs ont fabriqué des prototypes d'aérogénérateurs de grande puissance en augmentant le diamètre du rotor au maximum des possibilités techniques: par exemple les sociétés BOEING , DORNIER ,KAMAN ,et HAMILTON STANDARD ont fabriqué des rotors de 78, 90, 100,et même 120 mètres de diamètre ; ces très grands aérogénérateurs se sont avérés d'une exploitation et d'une maintenance difficiles. De ce fait, on utilise de préférence des aérogénérateurs de faible puissance, en en multipliant le nombre, ce qui présente l'inconvénient de consommer beaucoup d'espace.

Des ingénieurs spécialistes de l'énergie du vent ,notamment P.Thomas aux USA, H.Honnef en Allemagne ,L.Romani et A.Argand en France, ont imaginé des aérogénérateurs de grande puissance multirotors. Parmi les formules connues, la plus simple est celle du birotor, voir par exemple DE-C-549 618. Selon le projet d'aérogénérateur birotor publié par A.Argand, ancien directeur de la division Energie du Vent d'EDF, les deux rotors de 90 mètres et plus, à pas fixe, étaient fixés dans le même plan et à la même hauteur, sous le vent d'une traverse pivotante horizontale, portée par un pylone en béton armé. On observe que cette architecture présente plusieurs inconvénients: d'une part, l'envergure générale devient réellement excessive et d'autre part, le seul moyen de sauvegarde contre l'emballement consiste à freiner mécaniquement les deux rotors à pas fixe, opération qui peut générer des vibrations dangereuses.

De plus est connu dans l'art antérieur du DE-94 19 057 U un aérogénérateur à quatre rotors formé de deux paires de rotors coaxiaux , qui peut être assimilé à un aérogénérateur birotor par excès. Selon cet agencement , deux rotors sont fixés en avant et au vent d'une traverse pivotante horizontale à axe vertical et deux rotors sont fixés en arrière et sous le vent de cette traverse .

L'invention porte sur un aérogénérateur selon la revendication 1 et principalement sur des moyens destinés à améliorer la formule de l'aérogénérateur birotor, à deux rotors seulement , dont les axes sont horizontaux , séparés l'un de l'autre et parallèles et fixés à la même hauteur afin de rendre cette formule plus compétitive et plus sûre .

Les perfectionnements concernent particulièrement l'architecture générale des aérogénérateurs birotors.

L'invention concerne également un mode d'organisation préférentiel d'une centrale électrique éolienne.

Selon une caractéristique de l'invention ,relative à l'architecture générale d'un aérogénérateur birotor, les deux rotors sont fixés dans deux plans parallèles, de part et d'autre de la structure porteuse pivotante. Selon cette disposition non usuelle, l'un des rotors est au vent ,et l'autre sous le vent. L'architecture générale a un point de symétrie axial vertical qui coïncide exactement avec le centre de gravité des masses pivotantes.

D'autre part, le point d'application de la résultante des poussées horizontales du vent sur les rotors et sur la structure pivotante coïncident également sensiblement avec l'axe de pivotement.

Ainsi, selon cette architecture, il suffit d'une légère dissymétrie de traînée d'un rotor par rapport à l'autre pour provoquer un angle de pivotement de l'ensemble des deux rotors par rapport à la direction du vent. Cette caractéristique est particulièrement importante car ,outre l'amortissement naturel des rafales , elle autorise l'utilisation de rotors à pas fixe dont le plan de rotation pourra être effacé en position neutre, par exemple en déployant un volet aérofrein fixé sur la nacelle du rotor sous le vent. On pourra également piloter l'ensemble en faisant varier la traînée d'un rotor par rapport à l'autre par le moyen connu de volets articulés en bout de pales ou par des spoilers d'un type spécial fixés sur l'extrados des pales des rotors qui font l'objet d'une des revendications.

Selon une autre caractéristique de l'invention , autorisée par l'architecture du birotor ,les deux rotors peuvent avoir des diamètres supérieurs à leur entre-axe ; par conséquent le rotor au vent masque partiellement le rotor sous le vent, par exemple du tiers ,de la moitié ou des trois quarts du rayon. Ceci entraîne nécéssairement la perte d'une fraction de la puissance des deux rotors , notamment celui sous le vent, mais permet de réduire considérablement ,pour une même surface balayée, l'envergure de la structure pivotante , son rayon de giration, sa masse et bien évidemment son coût .

Selon une autre caractéristique de l'invention , on peut donner une direction oblique à la structure pivotante par rapport au plans de rotation des rotors. On conserve l'équilibre général avec l'avantage supplémentaire de pouvoir écarter les plans de rotation des deux rotors des turbulences générées par les membrures de la structure pivotante.

Selon une autre caractéristique de l'invention, le support dè l'aérogénérateur birotor sera agencé comme une grue pivotante dont la structure portant les nacelles et les rotors constitue les deux bras. Ces bras sont articulés de façon à permettre d'élever ou d'abaisser nacelles et rotors ce qui permet de pallier un des inconvénients majeurs des aérogénérateurs qui est la difficulté de montage et de maintenance.

selon une autre caractéristique de l'invention la structure pivotante aura une configuration en V et pivotera autour d'un fût vertical de moindre hauteur encastré dans le sol. L'ouverture du V sera d'environ 50°.

Selon une autre caractéristique ,les deux rotors sont contrarotatifs et leur régime de rotation , imposé par les alternateurs sera proportionnel à la vitesse du vent ,dans une plage s'étendant par exemple entre 3m/s et 20m/s.

Selon une autre caractéristique relative à la construction d'aérogénérateurs de très grande puissance ,les deux rotors seront de préférence de fabrication métallique, en acier ou alliages légers à revêtement textile .

Ce procédé de fabrication est particulièrement avantageux car il permet de transporter des grands rotors par tronçons, de les liaisonner puis de les entoiler "in situ". Bien entendu ,les structures textiles qui seront utilisées seront d'un type particulièrement résistant aux efforts de traction et à l'action des intempéries.

Selon une autre caractéristique les deux rotors à pas fixe seront équipés chacun de deux volets en bout de pale à commande électrique, ou bien de spoilers pneumatiques d'un type spécial qui, par leur gonflage ,permettront de provoquer un écoulement turbulent sur l'extrados des profils ,diminuant sensiblement la portance , le couple moteur et la poussée axiale .

Selon une autre caractéristique ,les deux groupes électromécaniques ,de conception modulaire ,seront composés de plusieurs alternateurs et multiplicateurs de vitesse, montés en parallèles . Par exemple, une puissance nominale installée de 15 Mw sera obtenue par douze alternateurs de 1250 Kw .

Selon une autre caractéristique l'aérogénérateur birotor aura deux modes de fonctionnement:
- 1° par vent faible, un mode stable et non piloté, où la structure pivotante est immobilisée sur le pylône fixe .
- 2° Par vent moyen ou fort, un mode de fonctionnement libre et piloté où les deux rotors s'orientent librement par rapport à la direction du vent; ou bien où l'orientation est commandée en créant une dissymétrie .

L'aérogénérateur birotor sera équipé des moyens usuels de l'électronique de puissance ,permettant de délivrer au réseau un courant à fréquence stable.

L'aérogénérateur birotor pourra avoir toutes les dimensions et toutes les puissances par exemple en utilisant deux rotors de type quelconque de 25 mètres à 100 mètres de diamètre , on obtient des machines de 500 Kw à 15 Mw.

Dans le cas où les rotors ont un diamètre qui n'excède pas par exemble 60 mètres ,il est géométriquement possible d'assembler deux rotors dans le plan qui passe exactement par l'axe de pivotement. Cette variante de l'invention s'applique à des aérogénérateurs birotors dont les deux ensemble rotor-nacelle ont une masse qui peut être supportée par des flèches composées chacune d'un seul tube d'acier de gros diamètre.

Selon une autre caractéristique de l'invention , les deux rotors sont disposés alternativement l'un au vent d'une flèche du support en V ,l'autre sous le vent de l'autre flèche. Les deux rotors sont dans le même plan et cette configuration caractéristique est obtenue en articulant les pieds des flèches aux deux angles opposés d'une embase carrée qui pivote autour du fût fixe et repose sur une couronne de galets.

Selon une autre caractéristique de l'invention les deux flèches de section sensiblement constante sont contreventées par une traverse horizontale intermédiaire qui pivote au sommet du fût et par des contrefiches obliques qui les réunissent aux deux autres angles de l'embase carrée.

selon une caractéristique de l'invention, dans le cas de l'association de deux rotors à pas variable de mécanisme connu ,le pilotage par rapport à la direction du vent s'opère en faisant varier le pas d'un des rotors par rapport à l'autre, par exemple en mettant l'un des rotors en drapeau , on obtient le pivotement de l'ensemble dans le lit du vent.

Selon une autre caractéristique de l'invention, on peut associer un rotor à pas fixe et un rotor à pas variable. Dans ce cas le pilotage s'effectue par modification du pas du rotor à pas variable.

selon une autre caractéristique de l'invention on peut associer deux rotors à pas entièrement fixe ,dans ce cas ,le pilotage est obtenu par la commande d'un volet aérofrein formant dérive, articulé le long d'une des flèches et actionné par un vérin fixé sur la traverse. On peut également créer une dissymétrie aérodynamique par le gonflement d'une enveloppe pneumatique fixée le long d'une des flèches. On a observé qu'il est possible de faire se placer dans le lit du vent un birotor doté de rotors bipales à pas fixe en immobilisant par des freins un rotor en position verticale , et l'autre en position horizontale ,les pales étendues de ce dernier formant dérive.

L'invention est décrite ci-après à l'aide de deux exemples et de références aux dessins joints dans lesquels:

La figure 1 est une vue de face d'un aérogénérateur birotor de grande puissance.

La figure 2 est une vue de dessus du même aérogénérateur birotor.

la figure 3 est une vue latérale du même aérogénérateur.

La figure 4 est une coupe longitudinale de la nacelle du rotor sous le vent indiquant un agencement d'un volet aérofrein.

La figure 5 est une coupe transversale de la même nacelle.

La figure 6 est une vue de la structure d'une partie d'une pale d'un rotor de grand diamètre.

la figure 7 est une vue du même profil montrant le spoiler pneumatique gonflé.

La figure 8 est une vue en coupe et en détail d'une moitié de l'aérogénérateur birotor.

La figure 9 est un arrachement vu en plan des attaches des bras articulés sur l'embase pivotante.

La figure 10 est une vue en perspective de l'aérogénérateur birotor.

la figure 11 est une vue en élévation et en coupe partielle d'un aérogénérateur birotor installé off-shore.

La figure 12 est un plan du même aérogénérateur installé off-shore.

La figure 13 est un plan schématique d'une centrale éléctrique éolienne implantée linéairement le long d'une ligne du réseau haute-tension.

la figure 14 est une vue de face d'un aérogénérateur birotor de moyenne puissance.

la figure 15 est une vue de profil du même aérogénérateur.

la figure 16 est une vue de dessus du même aérogénérateur montrant la position d'équilibre face au vent ,et en pointillé, une position d'évitement partiel.

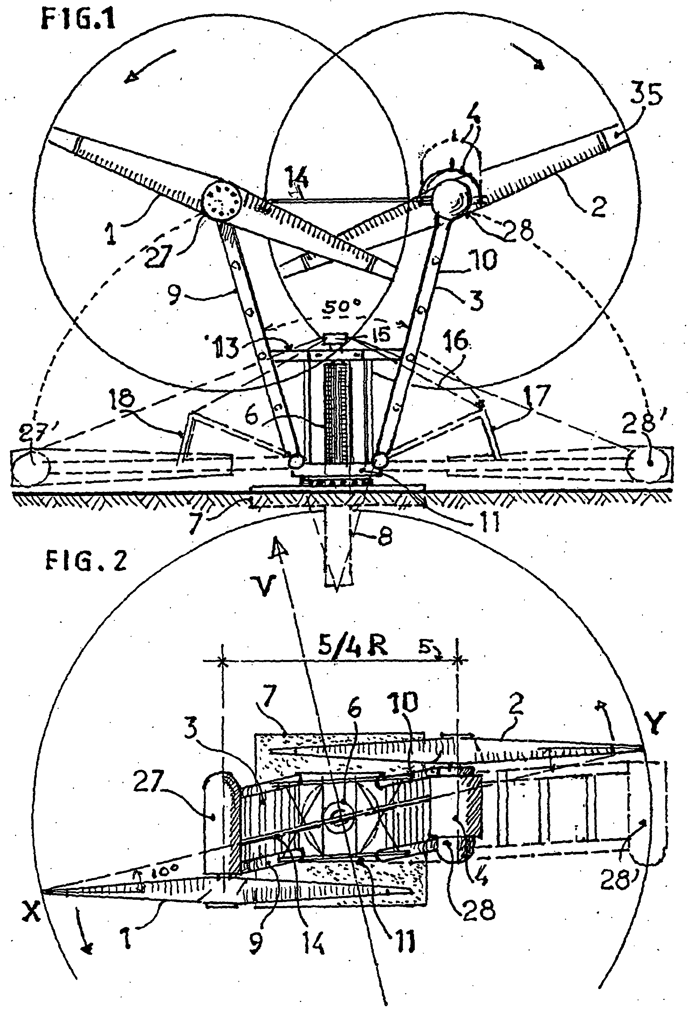

L'architecture générale de l'aérogénérateur birotor est présentée sur les figures 1,2,3 .
les proportions respectives sont les suivantes:
le rotor au vent 1 masque le rotor sous le vent 2 des trois-quarts du rayon, et les plans des rotors sont écartés de la moitié du rayon. L'entre-axe des deux rotors est égal au cinq-quarts du rayon et l'axe des deux rotors s'élève à partir du sol au sept-cinquièmes du rayon. Le plan des deux rotors fait un angle d'environ 10° avec le plan vertical de la structure pivotante 3. Selon ces proportions ,l'angle d'ouverture des deux bras de cette structure fait environ 50°. Le support fixe 6 a la forme d'un fût cylindrique, il s'élève sensiblement au niveau de l'intersection apparente des deux disques balayés par les rotors et, de ce fait ,ne crée pas d'obstruction .
le fût fixe 6 est fabriqué en béton armé, il est encastré dans une dalle 7 et se prolonge verticalement dans le sol en 8.
la structure pivotante 3 ,fabriquée principalement en tubes d'acier, est composée de deux bras articulés 9 et 10 sur une embase 11 qui repose sur une couronne de galets 12 .Ces deux bras articulés en forme de parallélogrammes ont une structure en poutre-échelle. Il sont réunis au niveau du sommet du fût par une traverse 13 qui sert au contreventement et, au niveau de l'axe des nacelles 27 et 28 par des tendeurs 14. les deux bras 9 et 10 peuvent tourner sur l'embase 11 et être ramenés à l'horizontale au voisinage du sol au moyen de treuils 15 et de moufles 16 après désolidarisation en deux moitiés 17 et 18 de la traverse pivotante 13 . On a représenté les deux rotors et les deux nacelles en position horizontale.
En fonctionnement normal l'équilibre naturel des deux rotors 1 et 2 les maintient dans une situation par rapport à la direction du vent où la ligne x-y qui réunit les deux extrémités de l'envergure générale est sensiblement perpendiculaire à la direction V du vent.
Lorsque le volet 4 est déployé ,l'ensemble des deux rotors pivote en position neutre par rapport à la direction du vent, le rotor 2 recule et le rotor 1 avance.

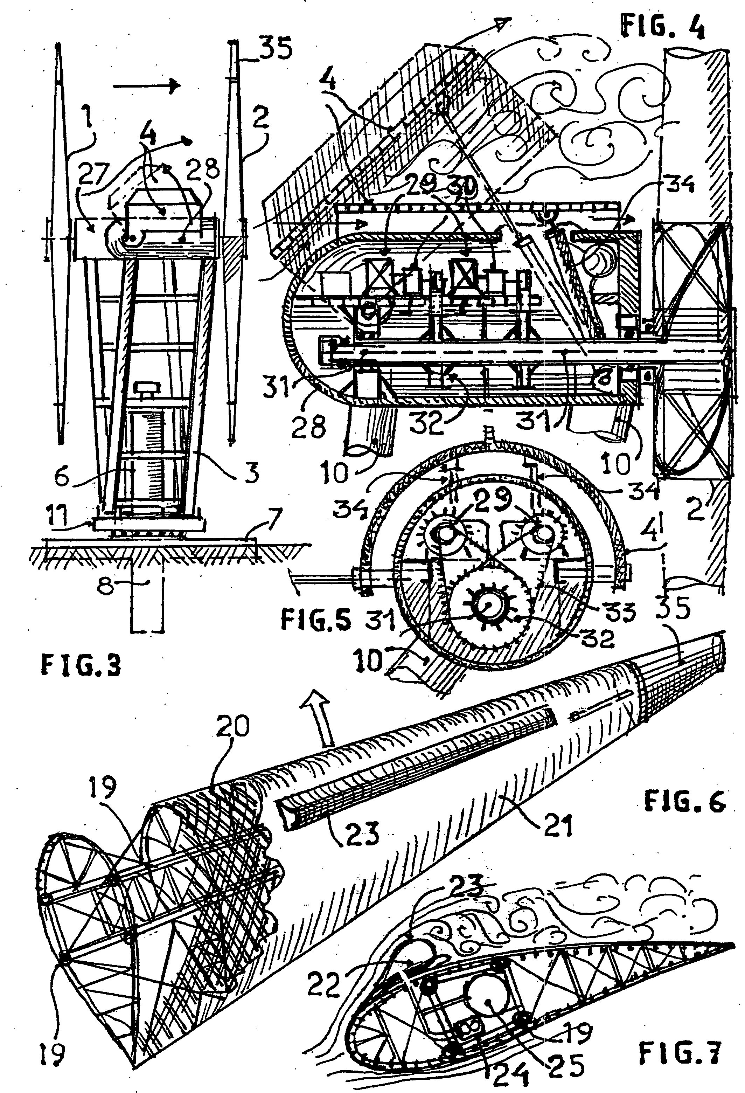

Sur les figures 4 et 5 on a représenté le groupe électromécanique de la nacelle 28 accouplé au rotor 2 . 31 est l'arbre moteur. 30 représente les multiplicateurs. 29 représente les alternateurs. 32 représente les pignons principaux de grand diamètre. 33 représente les chaînes de transmission. Le volet 4 est actionné par deux vérins pneumatiques 34 .

Sur les figures 6 et 7 on a représenté la structure d'une portion d'une pale de grand diamètre composée d'un longeron principal 19 en tubes d'acier et de forme vrillée portant des couples et définie par une structure géodésique 20 en mailles croisées du type utilisé sur des avions.
21 est le revêtement entoilé. 35 est l'un des volets articulés en bout de pale. 22 et 23 sont les spoilers représentés en position passive et active. Le spoiler 22 ,normalement plaqué sur l'extrados du profil par une dépression interne produite par l'action d'une pompe 24 est gonflé 23 sur commande ou automatiquement par un réservoir d'air comprimé 25 .

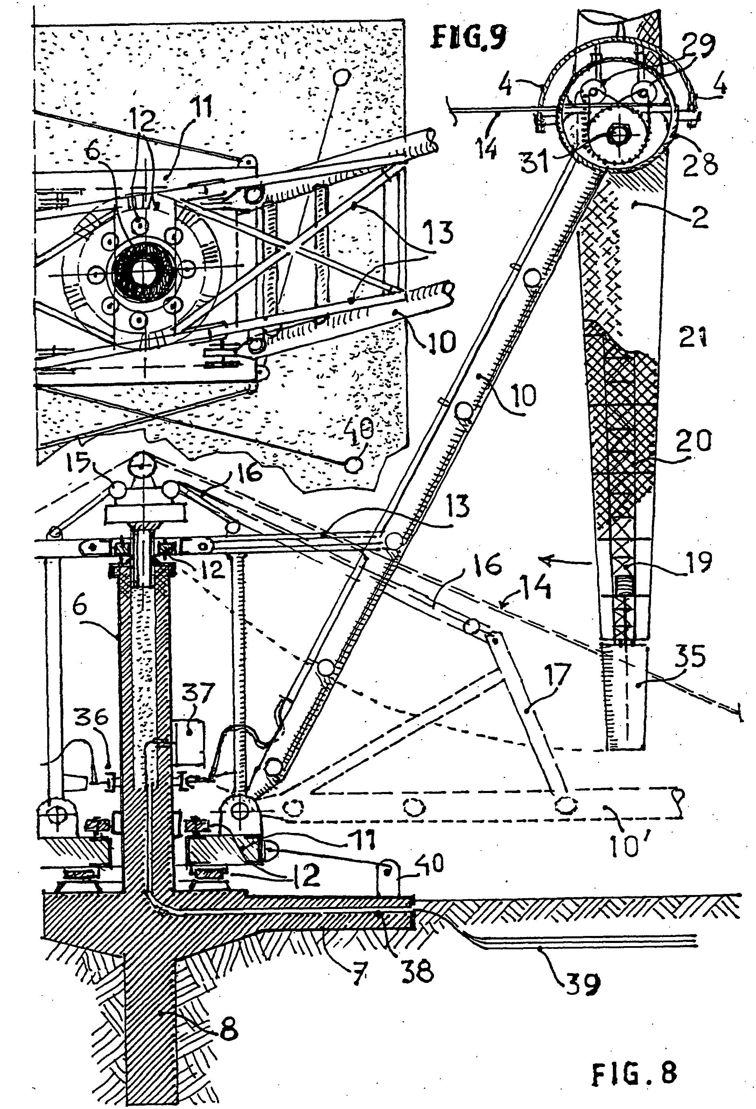

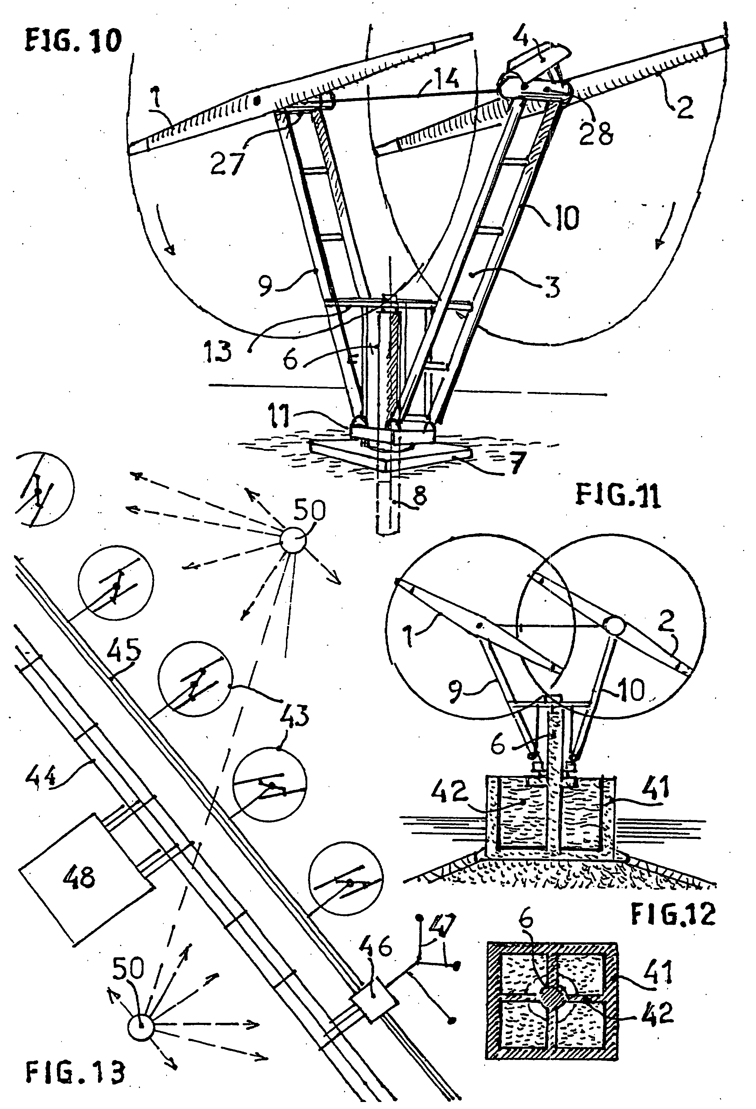

Les figures 8 et 9 représentent en détail une moitié de l'aérogénérateur birotor et les éléments déjà décrits précédemment.
On a représenté en particulier le dispositif de prise de force électrique. 36 est un rail conducteur fixe en anneau, solidarisé au fût de béton 6 par des isolateurs. La prise de force se fait par des contacts tournants. 37 est une boîte de contrôle électrique. 38 est une gaîne noyée dans la dalle 7 et dans le fût. 39 est le câble de raccordement au réseau. 40 est une bitte d'amarrage permettant d'immobiliser l'embase pivotante 11.

Sur la figure 10 on voit clairement l'aspect général de l'aérogénérateur birotor de grande puissance et notemment la superposition caractéristique des deux disques balayés par les rotors au vent et sous le vent .

Sur les figures 11 et 12 le même aérogénérateur birotor est solidarisé par le fût 6 à un caisson en béton armé 41 par le fond de celui-ci et par des cloisons 42.

La figure 13 représente l'organisation d'une partie du réseau. La centrale électrique éolienne dont on a représenté un tronçon est composée d'une pluralité d'aérogénérateurs birotors 43 et raccordée au réseau de haute-tension 44 par une ligne intérmédiaire enterrée 45 et un poste de transformation 46.
On a représenté en 47 une distribution directe à basse tension à des localités avoisinantes, et en 48 une centrale électrique conventionnelle à turbines à gaz raccordée au réseau de haute-tension et pilotée en fonction de la demande et des disponibilités en vent. On a représenté en 49 et 50 des postes anémométriques implantés à distance de part et d'autre de la file d'aérogénérateurs qui permettent de prédire l'évolution de la force et de la direction du vent au niveau de chaque aérogénérateur et de télécommander à l'avance le régime optimal de rotation et l'orientation des rotors.

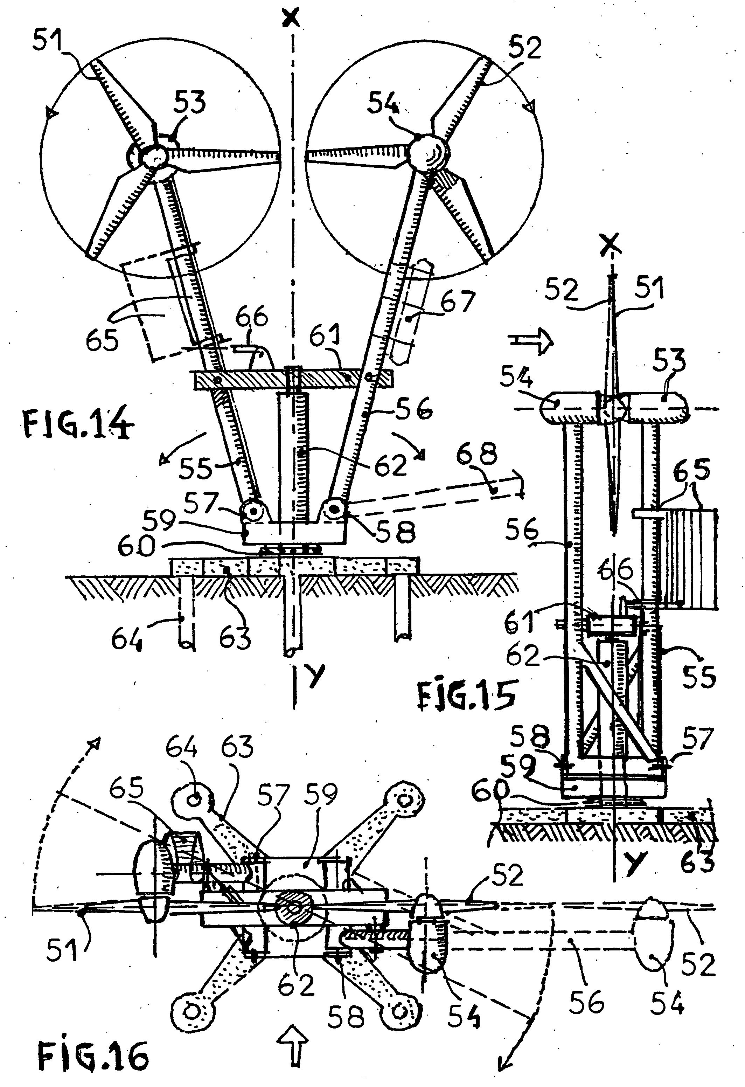

Sur les figures 14,15,16 on a représenté un aérogénérateur birotor de moyenne puissance dont les deux rotors 51 et 52 sont tripales à pas fixe et de fabrication conventionnelle, par exemple en matériaux plastiques composites.
Cet aérogénérateur birotor est porté sur un support orientable en V. Les deux rotors sont contrarotatifs et leur plans de rotation confondus passent par l'axe de pivotement et de symétrie X-Y .Le rotor 51 est au vent et le rotor 52 sous le vent.

Les deux nacelles 53 et 54 qui renferment les organes électro-mécaniques sont fixés en sens inverse aux sommets de deux flèches tubulaires 55 et 56 situées dans deux plans parallèles ,ces flèches sont fixées et articulées aux deux angles 57 et 58 d'une embase carrée 59. L'embase 59 pivote sur une couronne de galets 60.
Les deux flèches 55 et 56 sont réunies et contreventées par la traverse 61 qui tourne au sommet du fût fixe 62 solidaire d'une base de fondation cruciforme 63 qui repose sur des pieux 64. Le volet aérofrein 65 est actionné par le vérin 66. On a représenté comme variante d'aérofrein une enveloppe pneumatique gonflable 67. On a représenté en pointillé 68 la flèche 56, la nacelle 54 et le rotor 52 abaissés au voisinage du sol pour une opération de maintenance.

Selon une variante de l'invention ,les bras 9 et 10 et les flêches 55 et 56 du support en V pourront être également réalisés en charpente métallique en treillis analogue à celui utilisé pour la construction de flêches de grues.
De même ,le fût axial 62 pourra être réalisé en acier.

L'orientation naturelle et le pilotage des aérogénérateurs de masse importante pourra être assisté par un moteur d'orientation et un engrenage fixés par exemple sur l'embase 59 et le fût 62.

Les aérogénérateurs selon l'invention pourront constituer des centrales électriques éoliennes de toutes puissances, de configurations linéaire ou concentrées du type "ferme éolienne".

## Revendications

1. Aérogénérateur birotor du type selon lequel les deux rotors , dont les axes sont horizontaux , séparés l'un de l'autre et parallèles , sont fixés à la même hauteur et symétrique-ment sur une structure pivotante à axe vertical , **caractérisé en ce que** l'un des rotors seulement (1) est situé en avant et au vent de la structure pivotante (3) et que l'autre rotor seulement (2) est situé en arrière et sous le vent de la structure pivotante (3) et que , selon cette architecture équilibrée , on pilote l'ensemble par rapport à la direction du vent en créant une dissymétrie aéro-dynamique , soit au moyen d'un volet aérofrein (4) , soit en faisant varier la traînée et la portance de l'un des rotors par rapport à l'autre .

2. Aérogénérateur birotor selon la revendication 1 **caractérisé en ce que** les deux rotors(1)et(2) ont des diamètres supérieurs à leur entre-axe.

3. Aérogénérateur birotor selon la revendication 1 **caractérisé en ce que** la structure pivotante (3) a une direction générale oblique par rapport aux plans de rotation des rotors (1)et(2).

4. Aérogénérateur birotor selon la revendication 1 **caractérisé en ce que** la structure pivotante (3) a une configuration générale en V ,que cette structure(3) pivote autour d'un fût vertical(6) de moindre hauteur et que ce fût fixe est encastré dans une dalle de béton(7) et prolongé axialement dans le sol en(8).

5. Aérogénérateur birotor selon les revendications 1 et 4 **caractérisé en ce que** la structure pivotante en V (3) est constituée de deux bras (9)et(10) fabriqués en tubes d'acier, articulés au voisinage du sol sur une embase carrée(11) tournant autour du fût(6) et reposant sur la dalle(7) par l'intermédiaire d'une couronne de galets(12) , que les bras(9)et(10) sont par ailleurs retenus au niveau du sommet du fût(6) par une traverse pivotante(13) et réunis au niveau de l'axe des nacelles(27)et(28) par des tendeurs(14),et que ces bras peuvent être descendus ou remontés au moyen de treuils(15) et de moufles(16) après désolidarisation de la traverse pivotante(13) en deux moitiés(17)et(18).

6. Aérogénérateur birotor selon la revendication 1 **caractérisé en ce que** les deux rotors (1)et(2) sont de type bipale ,qu'ils sont symétriques et tournent en sens inverse ,qu'ils sont à profils épais et vrillés ,et qu'ils sont constitués d'une structure interne en acier(19) et d'une enveloppe(20) de type géodésique revêtue d'un d'un entoilage(21).

7. Aérogénérateur birotor selon la revendication 6 **caractérisé en ce que** les deux rotors(1)et(2) sont munis de spoilers(22) souples et pneumatiques, que ces spoilers placés sur l'extrados sont composés d'un boudin(23) en matériau plastique élastique, qu'ils sont mis en dépression par une pompe(24) et gonflés brusquement, sur commande ou automatiquement par un réservoir d'air comprimé(25).

8. Aérogénérateur birotor selon la revendication 1 **caractérisé en ce que** le pilotage par rapport à la direction du vent est obtenu par le déploiement plus ou moins important d'un volet aérofrein(4) articulé sur l'une ou l'autre des deux nacelles(27, 28) .

9. Aérogénérateur birotor selon la revendication 1 **caractérisé en ce que** les deux rotors(1)et(2) entraînent chacun une pluralité d'alternateurs(29) et de multilpicateurs(30) accouplés par des chaînes (33) à des pignons(32) solidaires de l'arbre(31) du rotor.

10. Aérogénérateur birotor à symétrie axiale selon la revendication 1 **caractérisé en ce que** les plans de rotation des deux rotors(51)et(52)sont confondus et passent par l'axe vertical de pivotement X-Y et que les deux rotors(51)et(52) ,de type , et de fabrication quelconque ont un diamètre inférieur à leur entre-axe.

11. Aérogénérateur birotor selon les revendications 1 et 10 **caractérisé en ce que** l'un des rotors(51) est situé au vent et l'autre(52) sous le vent.
Le support en V qui porte les deux nacelles (53) et (54) est composé de deux flèches(55)et(56) tubulaires fixées et articulées aux deux angles(57) et(58) d'une embase carrée(59) reposant sur une couronne de galets(60). Le support en V est contreventé par une traverse pivotante(61) tournant au sommet du fût axial(62) encastré dans une assise de fondation cruciforme(63).

12. Aérogénérateur birotor selon les revendications 1 et 10 **caractérisé en ce que** les deux rotors(51)et (52) sont à pas variable et que l'on commande l'attitude de l'ensemble par rapport à la direction du vent en faisant varier le pas de l'un des rotors par rapport à l'autre.

13. Aérogénérateur birotor selon les revendications 1 et 10 **caractérisé en ce que** l'un des rotors(51)ou (52) est à pas fixe et l'autre à pas variable et que l'on commande l'attitude de l'ensemble en modifiant le pas du rotor à pas variable .

14. Aérogénérateur birotor selon les revendications 1 et 10 **caractérisé en ce que** les deux rotors(51)et (52) sont à pas fixe et que l'on commande la manoeuvre d'évitement par rapport à la direction du vent en freinant ou en immobilisant l'un des deux rotors ou bien les deux dans des positions différentes .

15. Aérogénérateur birotor selon les revendications 1 et 10 **caractérisé en ce que** les deux rotors (51) et (52) sont à pas fixe et que l'orientation de l'ensemble par rapport à la direction du vent est obtenue par l'action d'un aérofrein formant dérive (65) dont l'angle de braquage est variable et commandé par un vérin(66) .L'aérofrein(65) est sur la flèche(55) du rotor au vent(51).

16. Centrale électrique éolienne , installée à terre ou bien off-shore **caractérisée en ce qu'**elle comporte un ou plusieurs aérogénérateurs selon l'une des revendications précédentes .

## Patentansprüche

1. Doppelradwindkraftturbine vom Typ, nach dem die beiden Räder, deren Achsen horizontal, voneinander getrennt und parallel angeordnet sind, auf der gleichen Höhe symmetrisch an einer drehbaren Struktur mit senkrechter Achse befestigt sind, **dadurch gekennzeichnet, dass** nur eines der Räder (1) vorn im Wind der drehbaren Struktur (3) angeordnet ist und dass nur das andere Rad (2) hinten und gegen den Wind der drehbaren Struktur (3) angeordnet ist, und dass nach dieser ausgeglichenen Architektur die gesamte Einheit zur Windrichtung so gesteuert wird, dass eine aerodynamische Asymmetrie entsteht, entweder mit Hilfe einer Luftbremsklappe (4) oder indem man den Luftwiderstand und den Auftrieb eines der Räder gegenüber dem andern verändert.

2. Doppelradwindkraftturbine nach Anspruch 1, **dadurch gekennzeichnet, dass** die beiden Räder (1) und (2) Durchmesser aufweisen, die größer als ihr Achsabstand sind.

3. Doppelradwindkraftturbine nach Anspruch 1, **dadurch gekennzeichnet, dass** die Drehstruktur (3) eine allgemeine Richtung aufweist, die schräg zu den Drehebenen der Räder (1) und (2) verläuft.

4. Doppelradwindkraftturbine nach Anspruch 1, **dadurch gekennzeichnet, dass** die Drehstruktur (3) eine allgemeine Anordnung in V-Form aufweist, dass sich diese Struktur (3) um einen senkrechten Schaft (6) geringerer Höhe dreht und dass dieser Schaft in eine Betonplatte (7) eingelassen ist und sich in Achsrichtung in (8) in den Boden verlängert.

5. Doppelradwindkraftturbine nach Anspruch 1 und 4, **dadurch gekennzeichnet, dass** die Drehstruktur in V-Form (3) aus zwei Armen (9) und (10) besteht, die aus Stahlrohren hergestellt sind und in Bodennähe auf einem quadratischen Sockel (11) um den Schaft drehen und über einen Rollenkranz (12) auf der Platte (7)aufliegen, dass die Arme (9) und (10) außerdem an der Spitze des Schaftes (6) durch einen drehbaren Querträger (13) festgehalten werden und in Höhe der Achse der Gehänge (27) und (28) durch Spanner (14) verbunden sind und dass diese Arme mit Winden (15) und Flaschenzügen (16) gesenkt oder gehoben werden können, nachdem der drehbare Querträger (13) in zwei Hälften (17) und (18) geteilt wird.

6. Doppelradwindkraftturbine nach Anspruch 1, **dadurch gekennzeichnet, dass** die beiden Räder (1) und (2) vom Tym mit zwei Schaufeln sind, dass sie symmetrisch sind und dass sie sich in entgegengesetzter Richtung drehen, dass sie dicke, verdrehte Profile aufweisen, und dass sie aus einer internen Struktur aus Stahl (19) und einer Hülle (20) vom geodätischen Typ bestehen und mit einem Gewebe (21) beschichtet sind.

7. Doppelradwindkraftturbine nach Anspruch 6, **dadurch gekennzeichnet, dass** die beiden Räder (1) und (2) mit biegsamen pneumatischen Spoilern (22) versehen sind, und dass diese Spoiler, die an den Saugseiten angeordnet sind, mit einem Wulst (23) aus elastischem Kunststoff bestehen, dass sie auf Befehl oder automatisch durch einen Drucklufstspeicher (25) durch eine Pumpe (24) in Unterdruck versetzt und plötzlich aufgeblasen werden.

8. Doppelradwindkraftturbine nach Anspruch 1, **dadurch gekennzeichnet, dass** diese Steuerung in Bezug auf die Windrichtung durch die mehr oder weniger starke Entfaltung einer Luftbremsklappe (4) erreicht wird, die an dem einem oder anderen Gehänge (27, 28) gelenkartig angebracht ist.

9. Doppelradwindkraftturbine nach Anspruch 1, **dadurch gekennzeichnet, dass** die beiden Räder (1) und (2) jeweils mehrere Wechselstromgeneratoren (29) und Übersetzungen (30) antreiben, die durch Ketten (33) mit Ritzeln (32) verbunden sind, die mit der Welle (31) des Rades fest verbunden sind.

10. Doppelradwindkraftturbine mit Achsialsymmetrie nach Anspruch 1, **dadurch gekennzeichnet, dass** die Drehebenen der beiden Räder (51) und (52) zusammenfallen und durch die senkrechte Drehachse X-Y führen und dass die beiden Räder (51) und (52), beliebigen Typs und beliebiger Fertigung sind, einen kleineren Durchmesser als ihren Achsabstand aufweisen.

11. Doppelradwindkraftturbine nach den Ansprüchen 1 und 10, **dadurch gekennzeichnet, dass** eines der Räder (51) in Windrichtung und das andere (52) gegen die Windrichtung weist. Die Halterung in V-Form, die die beiden Gehänge (53) und (54) trägt, besteht aus zwei festen rohrförmigen Auslegern (55) und (56), die an den beiden Winkeln (57) und (58) eines quadratischen Sockels (59) gelenkig befestigt sind, der auf einem Rollenkranz (60) aufliegt. Die V-förmige Halterung ist durch eine schwenkbare Traverse (61) verstrebt, die sich an der Spitze des achsialen Schaftes (62) dreht, der in einem kreuzförmigen Fundamentsockel (63)eingefasst ist.

12. Doppelradwindkraftturbine nach den Ansprüchen 1 und 10, **dadurch gekennzeichnet, dass** die beiden Räder (51) und (52) einen veränderlichen Schritt aufweisen und dass die Einstellung der Gesamtheit zur Windrichtung dadurch gesteuert wird, dass man den Schritt eines der Räder in Bezug auf das andere verstellt.

13. Doppelradwindkraftturbine nach einem der Ansprüche 1 und 10, **dadurch gekennzeichnet, dass** eines der Räder (51) oder (52) fest und das andere veränderlich eingestellt ist, und dass man die Position der Gesamtheit dadurch steuert, dass man den Schritt des Rotors mit veränderlichem Schritt einstellt.

14. Doppelradwindkraftturbine nach einem der Ansprüche 1 und 10, **dadurch gekennzeichnet, dass** eines der beiden Räder (51) und (52) mit festem Schritt versehen ist und dass man die Ausweichbewegung in Bezug auf die Windrichtung dadurch steuert, dass man eines der beiden Räder oder beide in verschiedenen Positionen bremst.

15. Doppelradwindkraftturbine nach einem der Ansprüche 1 und 10, **dadurch gekennzeichnet, dass** die beiden Räder (51) und (52) mit festem Schritt versehen sind und dass die Ausrichtung der gesamten Einheit in Bezug auf die Windrichtung durch eine Luftbremse erzielt wird, die ein Leitwerk (65) bildet, dessen Winkeleinschlag veränderlich und durch einen Zylinder (66) gesteuert ist. Die Luftbremse (65) befindet sich auf dem Ausleger (55) des Rades in Gegenwindrichtung (51).

16. Windkraftwerk, auf dem Land oder vor der Küste installiert, **dadurch gekennzeichnet, dass** es eine oder mehrere Windkraftturbinen nach einem der vorangehenden Ansprüche enthält.

## Claims

1. A pattern of wind turbine with twin rotor whose two rotors are separate and wherein the two distinct rotor-axis are both parallel and horizontal and wherein the two rotors are both set at an even height and are displayed symmetrically on the both sides and at the two tops of a structure wich wheels around its own vertical symmetry axis. This said wind turbine wherein one rotor(1) only is located before the wheeling structure(3) and upwind, and the other rotor(2) only is located behind the structure(3) and downwind may be commanded to wheel and trim in any direction, wherever the wind direction is through creating a dissymetry of drag between any side of the machine's vertical symmetry axis weither by the mean of an airbrake(4) or through inducing a difference of drag and thrust between one rotor(1)or(2) and the other one(1)or(2).

2. A wind turbine with twin rotor as claimed in claim 1 wherein each of the two rotors(1)or(2) has a larger span or diameter than the spacing lying between the two horizontal axis of the rotors(1)and(2).

3. A wind turbine with twin rotor as claimed in claim 1 wherein the wheeling structure(3) has an overall slant display in relation with the rotation plans of the rotors(1)and(2).

4. A wind turbine with twin rotor as claimed in claim 1 wherein the wheeling structure(3) has an overall V shape, wherein this structure(3) may wheel around a vertical fixed shaft or column(6) of a lesser height ; and this column(6) is driven deeply into the ground in(8) through an horizontal concrete layer(7).

5. A wind turbine with twin rotor as claimed in claims 1 and 4 wherein the wheeling V shaped structure(3) is formed with the assembly of two harm-beams(9)and(10) made of steel tubes ; and these beams(9)and(10) are connected near of ground level to a square baseplate(11) wheeling around the fixed column(6) and bearing over the layer(7) by the way of a roller-crown(12) ; and wherein these two harm-beams(9)and(10) are jointed together at column's(9) top level by a wheeling crossbeam(13) and linked together at nacell's(27)and(28) level with wire-strainers(14), so that these beams(9) and(10) may be rocked-up or rocked-down by the mean of winches(15) and pulley-blocks(16) after the wheeling crossbeam(13) would have been divided in two parts(17)and(18).

6. A wind turbine with twin rotor as claimed in claim 1 wherein the two rotors(1)and(2) are twin-bladed, are symmetric, and turn in counter-rotating way ; and wherein these rotors(1)and(2) have twisted, thick-profiled blades and are formed with an inner steel-structure(19) and a sheath (20) of geodetical type covered with a clothing skin(21).

7. A wind turbine with twin rotor as claimed in claim 6 wherein the two rotors(1)and(2) are equipped with flexible pneumatic spoilers(22) located on the extrados of the blades and these spoilers(22) consist in a flange(23) of plastic flexible material, and are normally kept flat in depression on the extrados by a pump(24) and may suddenly be blown, weither automatically or at command by the mean of a container(25) of compressed air.

8. A wind turbine with twin rotor as claimed in claim 1 wherein the wheeling trim movements of the set, including the structure(3),baseplate(11),and rotors(1)and(2) in relation with wind direction, are obtained by the action of an airbrake(4) whose degree of unfolding is commanded , this airbrake(4) being jointed with one nacell(27) or the other(28).

9. A wind turbine with twin rotor as claimed in claim 1 wherein each of the two rotors(1)and(2) drives several alternating current generators(29) by the way of step-up wheels(30) connected by driving chains(33) to spockets(32) locked with the rotor shaft(31).

10. A wind turbine with twin rotor as claimed in claim 1 wherein the two rotors rotation disks(51)and(52) are on an even plan, wich includes the machine's wheeling vertical axis X-Y, and wherein the two rotors(51)and(52) of any type and building own each a lesser diameter than the spacing lying between the two rotor shafts.

11. A wind turbine with twin rotor as claimed in claims 1 an 10 wherein one rotor(51) only is located upwind, and the other rotor(52) only is located downwind ; wherein the V - shaped structure wich bears the two nacells(53)and (54) consists in two tubular beams(55)and(56) jointed at the two corners(57)and(58) of a square baseplate(59) wich bears on a roller-crown(60) ; and wherein the V - shaped structure is connected to a wheeling crossbeam(61) bearing on the top of the axial column(62), (62) being driven through a cross-shaped foundation bedplate(63).

12. A wind turbine with twin rotor as claimed in claims 1 and 10 wherein the two rotors(51)and(52) are of commanded variable-pitch type, and wherein the wheeling trim of the wind turbine in relation with wind direction is obtained through commanding a change of pitch of one rotor compared with the other one.

13. A wind turbine with twin rotor as claimed in claims 1 and 10 wherein one rotor is stall whereas the other one is of variable-pitch type and wherein the wheeling trim is obtained through commanding a change of pitch on the variable-pitch rotor.

14. A wind turbine with twin rotor as claimed in claims 1 and 10 wherein the two rotors(51)and(52) are both stall ; and wherein the escape maneuver in relation with wind direction is achieved with slowering one rotor, or with immobilizing the two rotors(51)and(52) in different positions

15. A wind turbine with twin rotor as claimed in claims 1 and 10 wherein the two rotors(51)and(52) are both stall ; and wherein the whole set wheeling trim in relation whith wind direction is commanded by the action of an airbrake flap(65) acting as a rudder or as an aerodynamic keel, whose pitch and degree of unfolding is variable and commanded by a jack. This airbrake flap(65) is located and jointed on the harm-beam(55) wich bears the upwind rotor(51).

16. A wind power plant settled weither in-land or off-shore wherein one ore more wind turbines includes any feature from ones depicted among the previous claims.
